# FASCICULE DE BREVET EUROPEEN

(11) **EP 3 372 383 B1**
(45) Date de publication et mention de la délivrance du brevet: **04.12.2019**
(21) Numéro de dépôt: 17166301.6
(22) Date de dépôt: 12.04.2017
(51) Int. Cl.: B29C 55/14, B29C 55/16, B29C 55/20, B29C 48/00, B29K 105/00

(54) **DISPOSITIF D'ÉTIRAGE POUR ÉTIRER UN FILM EN MATIÈRE SYNTHÉTIQUE AU MOINS DANS UN SENS TRANSVERSAL**
STRECKVORRICHTUNG ZUM STRECKEN EINER SYNTHETISCHEN FOLIE MINDESTENS IN EINE QUERRICHTUNG
STRETCHING DEVICE FOR STRETCHING A FILM OF SYNTHETIC MATERIAL AT LEAST IN A TRANSVERSE DIRECTION

(30) Priorité: 10.03.2017 FR 1751956
(43) Date de publication de la demande: 12.09.2018
(73) Titulaire: Marchante, Carolina, 73370 Le Bourget du Lac (FR)
(72) Inventeur: Marchante, Carolina, 73370 Le Bourget du Lac (FR)
(74) Mandataire: Verriest, Philippe

(56) Documents cités:
- FR-A1- 2 922 810
- JP-A- 2012 121 259
- JP-A- 2013 031 938

## Description

La présente invention concerne un dispositif d'étirage pour étirer un film en matière synthétique au moins dans le sens transversal.

Lors de la fabrication d'un film en matière synthétique, tel qu'un film en polypropylène, en polyester ou composé de toute autre matière thermoplastique, le film, après sa formation, passe successivement par une étape d'étirage longitudinal et une étape d'étirage transversal.

Un système d'étirage, configuré pour étirer un film en matière synthétique dans le sens transversal, comporte de façon connue un four permettant de réguler la température du film pendant son étirage dans le sens transversal, et deux dispositifs d'étirage disposés de part et d'autre du film. Chaque dispositif d'étirage comporte plus particulièrement :
- un rail de guidage s'étendent au moins en partie dans le four et comportant une première surface de guidage tournée vers le film et une deuxième surface de guidage opposée à la première surface de guidage,
- une pluralité de pinces destinées chacune à saisir un même bord longitudinal du film, les pinces étant configurées pour être guidées en translation par le rail de guidage respectif,
- un rail de retenue s'étendant le long du rail de guidage respectif, le rail de retenue comportant une surface d'appui tournée vers le rail de guidage respectif et une surface de retenue opposée à la surface d'appui,
- une pluralité d'éléments de guidage configurés pour être guidés en translation par le rail de retenue, et
- une chaîne sans fin comportant une succession de maillons montés articulées les uns par rapport aux autres et des premiers et deuxièmes éléments d'articulation reliant de manière articulée les maillons, chaque pince étant montée articulée sur un premier élément d'articulation respectif et chaque élément de guidage étant monté articulé sur un deuxième élément d'articulation respectif, la chaîne sans fin étant configurée pour entraîner les pinces respectives le long du rail de guidage respectif, et pour entraîner les éléments de guidage respectifs le long du rail de retenue respectif, la chaîne sans fin étant en outre déformable entre un premier état dans lequel les pinces sont disposées à proximité les unes des autres, et un deuxième état dans lequel les pinces sont éloignées les unes des autres.

De façon avantageuse, chaque élément de guidage comporte des galets de roulement configurés pour coopérer respectivement avec la surface d'appui et la surface de retenue du rail de retenue respectif, et chaque pince comporte également des galets de roulement configurés pour coopérer respectivement avec la première surface de guidage et deuxième surface de guidage du rail de guidage respectif. Ces dispositions assurent un guidage des éléments de guidage et des pinces sur les rails respectif.

Un tel système d'étirage est adapté à des vitesses de production élevées, y compris lorsque ce système d'étirage est configuré pour assurer simultanément un étirage du film dans le sens transversal et un étirage du film dans le sens longitudinal.

Cependant, du fait de la largeur importante des pinces, la distance entre deux zones de préhension adjacentes du film peut s'avérer très élevée, en particulier lorsque chaque chaîne sans fin est dans le deuxième état et que les pinces sont éloignées les unes des autres. Par exemple, avec des pinces ayant chacune une largeur de 50 mm et un étirage longitudinal d'un rapport de 8, la distance entre zones de préhension adjacentes du film sera de 400 mm. Une telle distance entre pinces a pour conséquence que l'épaisseur du film n'est pas homogène au niveau des bords longitudinaux du film, ce qui requiert une découpe du film au niveau des bords longitudinaux, et donc génère d'importantes pertes de produits.

Une solution pour pallier cet inconvénient consiste à réduire la largeur de chaque pince. Par exemple, avec des pinces ayant chacune une largeur de 25 mm et un étirage longitudinal d'un rapport de 8, la distance entre zones de préhension adjacentes du film sera uniquement de 200 mm. Ainsi, l'utilisation de pinces de faible largeur permet d'obtenir de films ayant une meilleure homogénéité en épaisseur et ce avec peu de déchets.

Cependant, une telle solution implique l'utilisation de galets de roulement de plus faibles diamètres afin d'éviter un conflit entre les galets de roulement de deux pinces adjacentes lorsque la chaine est dans le premier état, et nécessite donc de réduire de manière sensible la vitesse de déplacement de la chaîne sans fin. Il en résulte une diminution sensible des vitesses de production.

En outre, le document FR 2 922 810 A1 révèle un dispositif d'étirage selon le préambule de la revendication 1.

La présente invention vise à remédier à tout ou partie de ces inconvénients.

Le problème technique à la base de l'invention consiste donc à fournir un dispositif d'étirage qui permette l'utilisation de pinces de faible largeur, tout en étant adapté à des vitesses de production élevées.

A cet effet, la présente invention concerne un dispositif d'étirage pour étirer un film en matière synthétique au moins dans un sens transversal, comprenant :
- un rail de guidage comportant une première surface de guidage destinée à être tournée vers le film et une deuxième surface de guidage opposée à la première surface de guidage,
- une pluralité de premières pinces d'un premier type et une pluralité de deuxièmes pinces d'un deuxième type destinées chacune à saisir un même bord longitudinal du film, les premières et deuxièmes pinces étant disposées alternativement le long du rail de guidage et étant configurées pour être guidées par le rail de guidage,
- une chaîne sans fin reliée aux premières et deuxièmes pinces et configurée pour entraîner les premières et deuxièmes pinces le long du rail de guidage, la chaîne sans fin étant déformable entre un premier état dans lequel les premières et deuxièmes pinces sont disposées à proximité les unes des autres, et un deuxième état dans lequel les premières et deuxièmes pinces sont éloignées les unes des autres,
chaque première pince comporte un galet de guidage primaire configuré pour coopérer avec la première surface de guidage du rail de guidage et chaque deuxième pince comporte un galet de guidage secondaire configuré pour coopérer avec la première surface de guidage du rail de guidage, le galet de guidage primaire de chaque première pince étant décalé verticalement par rapport au galet de guidage secondaire de chaque deuxième pince adjacente à ladite première pince, les premières et deuxièmes pinces étant configurées de telle sorte que, lorsque la chaîne sans fin est dans le premier état, le galet de guidage primaire de chaque première pince et le galet de guidage secondaire de chaque deuxième pince adjacente à ladite première pince se chevauchent au moins en partie.

En d'autres termes, les premières et deuxièmes pinces sont configurées de telle sorte que, lorsque la chaîne est dans le premier état, une projection orthogonale du galet de guidage primaire de chaque première pince dans un plan de référence horizontal et une projection orthogonale du galet de guidage secondaire de chaque deuxième pince adjacente à ladite première pince dans le plan de référence horizontal comportent au moins une portion commune.

Une telle configuration des premières et deuxièmes pinces, et en particulier le fait que les galets de guidage primaires et secondaires des premières et deuxièmes pinces se chevauchent au moins en partie lorsque la chaîne sans fin est dans le premier état, autorise l'utilisation de pinces de faible largeur et de galets de guidage de diamètres importants, et ce sans risque de conflit entre des galets de guidage. Par conséquent, le dispositif d'étirage selon l'invention est adapté à des vitesses de production élevées (et notamment une vitesse de chaîne jusqu'à 500 m/mn), tout en limitant fortement les pertes de produit.

En outre, du fait de l'utilisation de galets de guidage de diamètres importants, le dispositif d'étirage selon l'invention est également adapté à de grands efforts d'étirage notamment pour l'étirage de films épais.

De plus, l'utilisation de galets de guidage de grands diamètres permet de diminuer la force de friction entre les galets de guidage et le rail de guidage, et donc de réduire la vitesse d'usure de ces derniers, tout en assurant un bon guidage des premières et deuxièmes pinces par rapport au rail de guidage.

Par exemple, le dispositif d'étirage selon l'invention permet l'utilisation de premières et deuxièmes pinces ayant des largeurs par exemple comprises entre 25 et 50 mm, et de galets de guidage primaires et secondaires ayant des diamètres jusqu'à environ 52 mm ou plus si nécessaire.

Le dispositif d'étirage peut en outre présenter une ou plusieurs des caractéristiques suivantes, prises seules ou en combinaison.

Selon un mode de réalisation de l'invention, les galets de guidage primaires s'étendent sensiblement dans un premier plan d'extension et les galets de guidage secondaires s'étendent sensiblement dans un deuxième plan d'extension sensiblement parallèle au premier plan d'extension et décalé par rapport au premier plan d'extension.

Selon un mode de réalisation de l'invention, chaque deuxième pince comporte au moins un évidement de réception, le galet de guidage primaire de chaque première pince s'étendant au moins en partie dans l'évidement de réception de chaque deuxième pince adjacente lorsque la chaîne sans fin est dans le premier état.

Selon un mode de réalisation de l'invention, chaque première pince comporte un corps de pince, le galet de guidage primaire de chaque première pince faisant saillie latéralement de part et d'autre du corps de pince de ladite première pince.

Selon un mode de réalisation de l'invention, chaque deuxième pince comporte un corps de pince, le galet de guidage secondaire de chaque deuxième pince faisant saillie latéralement de part et d'autre du corps de pince de ladite deuxième pince.

Selon un mode de réalisation de l'invention, la chaîne sans fin comporte au moins :
- des premiers maillons d'un premier type et des deuxièmes maillons d'un deuxième type montés articulés les uns par rapport aux autres, et
- des premiers éléments d'articulation et des deuxièmes éléments d'articulation disposés de manière alternée le long de la chaîne sans fin et autour desquels sont montés articulés les premiers et deuxièmes maillons, les premières et deuxièmes pinces étant montées, de préférence articulées, sur les premiers éléments d'articulation.

Selon un mode de réalisation de l'invention, les premiers et deuxièmes éléments d'articulation s'étendent sensiblement verticalement.

Selon un mode de réalisation de l'invention, le galet de guidage primaire de chaque première pince a un axe de rotation sensiblement vertical.

Selon un mode de réalisation de l'invention, le galet de guidage secondaire de chaque deuxième pince a un axe de rotation sensiblement vertical.

Selon un mode de réalisation de l'invention, chaque première pince comporte un galet de roulement primaire configuré pour rouler sur une surface supérieure du rail de guidage.

Selon un mode de réalisation de l'invention, chaque deuxième pince comporte un galet de roulement secondaire configuré pour rouler sur la surface supérieure du rail de guidage.

Selon un mode de réalisation de l'invention, le galet de roulement primaire de chaque première pince a un axe de rotation sensiblement horizontal.

Selon un mode de réalisation de l'invention, le galet de roulement secondaire de chaque deuxième pince a un axe de rotation sensiblement horizontal.

Selon un mode de réalisation de l'invention, chaque premier élément d'articulation sur lequel est montée une première pince porte un galet d'appui configuré pour coopérer avec la deuxième surface de guidage du rail de guidage.

Selon un mode de réalisation de l'invention, chaque deuxième maillon comporte un galet d'appui configuré pour prendre appui contre la deuxième surface de guidage du rail de guidage.

Selon un mode de réalisation de l'invention, le galet d'appui porté par chaque premier élément d'articulation sur lequel est montée une première pince a un axe de rotation sensiblement vertical.

Selon un mode de réalisation de l'invention, le galet de d'appui de chaque deuxième maillon a un axe de rotation sensiblement vertical.

Selon un mode de réalisation de l'invention, le galet d'appui porté par chaque premier élément d'articulation sur lequel est montée une première pince est décalé verticalement par rapport au galet d'appui de chaque deuxième maillon adjacent audit premier élément d'articulation, la chaîne sans fin étant configurée de telle sorte que, lorsque la chaîne sans fin est dans le premier état, le galet d'appui porté par chaque premier élément d'articulation sur lequel est montée une première pince et le galet d'appui de chaque deuxième maillon adjacent audit premier élément d'articulation se chevauchent au moins en partie.

En d'autres termes, la chaîne sans fin est configurée de telle sorte que, lorsque la chaîne est dans le premier état, une projection orthogonale du galet d'appui porté par chaque premier élément d'articulation sur lequel est montée une première pince dans un plan de référence horizontal et une projection orthogonale du galet d'appui de chaque deuxième maillon adjacent dans le plan de référence horizontal comportent au moins une portion commune.

Selon un mode de réalisation de l'invention, le galet d'appui porté par chaque deuxième maillon s'étend sensiblement en regard d'un premier élément d'articulation sur lequel est montée une deuxième pince. Avantageusement, la chaîne sans fin est configurée de telle sorte que, lorsque la chaîne est dans le premier état, le galet d'appui porté par chaque premier élément d'articulation sur lequel est monté une première pince s'étend au moins en partie entre le galet d'appui d'un deuxième maillon adjacent et le corps de pince d'une deuxième pince montée sur le premier élément d'articulation situé sensiblement en regard du galet d'appui dudit deuxième maillon.

Selon un mode de réalisation de l'invention, le galet d'appui porté par chaque deuxième maillon s'étend sensiblement coaxialement avec le premier élément d'articulation situé sensiblement en regard dudit galet d'appui.

Selon un mode de réalisation de l'invention, le dispositif d'étirage comporte en outre :
- un rail de retenue s'étendant le long du rail de guidage, le rail de retenue comportant une surface d'appui tournée vers le rail de guidage et une surface de retenue opposée à la surface d'appui, et
- une pluralité de premiers éléments de guidage et une pluralité de deuxièmes éléments de guidage disposés alternativement le long du rail de retenue et configurés pour être guidés par le rail de retenue, les premiers et deuxièmes éléments de guidage étant montés, de préférence articulés, sur les deuxièmes éléments d'articulation de la chaîne sans fin et étant configurés pour être entraînés par la chaîne sans fin le long du rail de retenue.

Selon un mode de réalisation de l'invention, le rail de retenue comporte une première portion de rail s'étendant sensiblement parallèlement au rail de guidage et écartée du rail de guidage d'une première distance, et une deuxième portion de rail s'étendant sensiblement parallèlement au rail de guidage et écartée du rail de guidage d'une deuxième distance différente de la première distance, la deuxième portion de rail étant située en aval de la première portion de rail, et le rail de retenue est configuré de telle sorte qu'un déplacement des premiers et deuxièmes éléments de guidage de la première portion de rail à la deuxième portion de rail entraîne une déformation de la chaîne sans fin entre les premier et deuxième états.

Selon un mode de réalisation de l'invention, le rail de retenue comporte une portion de transition reliant la première portion de rail et la deuxième portion de rail. Avantageusement, la portion de transition forme une rampe inclinée.

Selon un mode de réalisation de l'invention, la deuxième distance est inférieure à la première distance, et le rail de retenue est configuré de telle sorte qu'un déplacement des premiers et deuxièmes éléments de guidage de la première portion de rail à la deuxième portion de rail entraîne une déformation de la chaîne sans fin du premier état au deuxième état de manière à induire un étirage longitudinal du film.

Selon un autre mode de réalisation de l'invention, la deuxième distance est supérieure à la première distance, et le rail de retenue est configuré de telle sorte qu'un déplacement des premiers et deuxièmes éléments de guidage de la première portion de rail à la deuxième portion de rail entraîne une déformation de la chaîne sans fin du deuxième état au premier état de manière à induire une relaxation longitudinale du film.

Selon un mode de réalisation de l'invention, chaque premier élément de guidage comporte un galet de retenue primaire configuré pour coopérer avec la surface de retenue du rail de retenue et chaque deuxième élément de guidage comporte un galet de retenue secondaire configuré pour coopérer avec la surface de retenue du rail de retenue, le galet de retenue primaire de chaque premier élément de guidage étant décalé verticalement par rapport au galet de retenue secondaire de chaque deuxième élément de guidage adjacent audit premier élément de guidage, les premiers et deuxièmes éléments de guidage étant configurés de telle sorte que, lorsque la chaîne est dans le premier état, le galet de retenue primaire de chaque premier élément de guidage et le galet de retenue secondaire de chaque deuxième élément de guidage adjacent audit premier élément de guidage se chevauchent au moins en partie.

En d'autres termes, la chaîne sans fin est configurée de telle sorte que, lorsque la chaîne est dans le premier état, une projection orthogonale du galet de retenue primaire de chaque premier élément de guidage dans un plan de référence horizontal et une projection orthogonale du galet de retenue secondaire de chaque deuxième élément de guidage adjacent audit premier élément de guidage dans le plan de référence horizontal comportent au moins une portion commune.

Selon un mode de réalisation de l'invention, chaque galet de retenue primaire est agencé pour être retenu par le rail de guidage de manière à appliquer une force de retenue sur le deuxième élément d'articulation respectif, et chaque galet de retenue secondaire est agencé pour être retenu par le rail de guidage de manière à appliquer une force de retenue sur le deuxième élément d'articulation respectif.

Selon un mode de réalisation de l'invention, la portion de transition est configurée pour diminuer la force de retenue appliquée sur chaque deuxième élément d'articulation afin de déformer la chaîne sans fin dans le deuxième état.

Selon un mode de réalisation de l'invention, la portion de transition est configurée pour augmenter la force de retenue appliquée sur chaque deuxième élément d'articulation afin de déformer la chaîne sans fin dans le premier état.

Selon un mode de réalisation de l'invention, le galet de retenue primaire de chaque premier élément de guidage a un axe de rotation sensiblement vertical.

Selon un mode de réalisation de l'invention, le galet de retenue secondaire de chaque deuxième élément de guidage a un axe de rotation sensiblement vertical.

Selon un mode de réalisation de l'invention, chaque premier élément de guidage comporte un corps de guidage, le galet de retenue primaire de chaque premier élément de guidage faisant saillie latéralement de part et d'autre du corps de guidage dudit premier élément de guidage.

Selon un mode de réalisation de l'invention, chaque deuxième élément de guidage comporte un corps de guidage, le galet de retenue secondaire de chaque deuxième élément de guidage faisant saillie latéralement de part et d'autre du corps de guidage dudit deuxième élément de guidage.

Selon un mode de réalisation de l'invention, chaque premier élément de guidage comporte un galet de roulement primaire configuré pour rouler sur une surface supérieure du rail de retenue. Avantageusement, le galet de roulement primaire de chaque premier élément de guidage a un axe de rotation sensiblement horizontal.

Selon un mode de réalisation de l'invention, chaque deuxième élément de guidage comporte un galet de roulement secondaire configuré pour rouler sur la surface supérieure du rail de retenue. Avantageusement, le galet de roulement secondaire de chaque deuxième élément de guidage a un axe de rotation sensiblement horizontal.

Selon un mode de réalisation de l'invention, la chaîne sans fin comporte en outre des troisièmes maillons d'un troisième type, chaque troisième maillon comportant un galet d'appui configuré pour coopérer avec la surface d'appui du rail de retenue.

Selon un mode de réalisation de l'invention, chaque deuxième élément d'articulation sur lequel est monté un premier élément de guidage porte un galet d'appui configuré pour coopérer avec la surface d'appui du rail de retenue.

Selon un mode de réalisation de l'invention, le galet d'appui porté par chaque deuxième élément d'articulation sur lequel est monté un premier élément de guidage est décalé verticalement par rapport au galet d'appui de chaque troisième maillon adjacent audit deuxième élément d'articulation, la chaîne sans fin étant configurée de telle sorte que, lorsque la chaîne est dans le premier état, le galet d'appui porté par chaque deuxième élément d'articulation sur lequel est monté un premier élément de guidage et le galet d'appui de chaque troisième maillon adjacent audit deuxième élément d'articulation se chevauchent au moins en partie.

En d'autres termes, la chaîne sans fin est configurée de telle sorte que, lorsque la chaîne est dans le premier état, une projection orthogonale du galet d'appui porté par chaque deuxième élément d'articulation sur lequel est monté un premier élément de guidage dans un plan de référence horizontal et une projection orthogonale du galet d'appui de chaque troisième maillon adjacent audit deuxième élément d'articulation dans le plan de référence horizontal comportent au moins une portion commune.

Selon un mode de réalisation de l'invention, le galet d'appui porté par chaque troisième maillon s'étend sensiblement en regard d'un deuxième élément d'articulation sur lequel est monté un deuxième élément de guidage. Avantageusement, la chaîne sans fin est configurée de telle sorte que, lorsque la chaîne est dans le premier état, le galet d'appui porté par chaque deuxième élément d'articulation sur lequel est monté un premier élément de guidage s'étend au moins en partie entre le galet d'appui d'un troisième maillon adjacent et le corps de guidage d'un deuxième élément de guidage monté sur le deuxième élément d'articulation situé sensiblement en regard du galet d'appui dudit troisième maillon.

Selon un mode de réalisation de l'invention, le galet d'appui porté par chaque troisième maillon s'étend sensiblement coaxialement avec le deuxième élément d'articulation situé sensiblement en regard dudit galet d'appui.

La présente invention concerne en outre un système d'étirage pour étirer un film en matière synthétique au moins dans un sens transversal, comprenant deux dispositifs d'étirage selon l'invention disposés de part et d'autre du film, les premières et deuxièmes pinces de l'un des dispositifs d'étirage étant agencées pour saisir un premier bord longitudinal du film et les premières et deuxièmes pinces de l'autre des dispositifs d'étirage étant agencées pour saisir un deuxième bord longitudinal du film.

Selon un mode de réalisation de l'invention, le système d'étirage comporte un four, et les rails de guidage des deux dispositifs d'étirage s'étendent au moins en partie dans le four.

Selon un mode de réalisation de l'invention, les rails de guidage des deux dispositifs d'étirage divergent l'un par rapport à l'autre dans une première zone du système d'étirage.

Selon un mode de réalisation de l'invention, les rails de guidage des deux dispositifs d'étirage s'étendent sensiblement parallèlement l'un par rapport à l'autre dans une deuxième zone du système d'étirage située en aval de la première zone du système d'étirage.

Selon un mode de réalisation de l'invention, la deuxième portion de rail de chaque rail de retenue est située au moins en partie dans la première zone du système d'étirage. Ces dispositions permettent d'assurer un étirage longitudinal ou une relaxation longitudinale du film simultanément à un étirage transversal du film.

Selon un mode de réalisation de l'invention, la portion de transition de chaque rail de retenue est située au moins en partie dans la deuxième zone du système d'étirage. Ces dispositions permettent d'assurer un étirage longitudinal ou une relaxation longitudinale du film après à un étirage transversal du film.

De toute façon l'invention sera bien comprise à l'aide de la description qui suit en référence aux dessins schématiques annexés représentant, à titre d'exemple non limitatif, une forme d'exécution de ce système d'étirage.
Figure 1 est une vue d'ensemble d'une installation de production d'un film en matière synthétique.
Figures 2 à 4 sont des vues partielles en perspective d'un dispositif d'étirage appartenant à l'installation de production de la figure 1.
Figure 5 est une vue de côté du dispositif d'étirage de la figure 2, montrant plus particulièrement des premiers et deuxièmes éléments de guidage appartenant au dispositif d'étirage.
Figure 6 est une vue partielle en coupe longitudinale du dispositif d'étirage de la figure 2.
Figure 7 est une vue partielle de dessus du dispositif d'étirage de la figure 2.
Figure 8 est une vue partielle en coupe dans un plan horizontal du dispositif d'étirage de la figure 2, montrant l'agencement de différents galets appartenant au dispositif d'étirage de la figure 2.
Figure 9 est une vue en perspective du dispositif d'étirage de la figure 2, montrant des première et deuxième pinces appartenant au dispositif d'étirage éloignées les unes des autres.
Figure 10 est une vue partielle en coupe longitudinale du dispositif d'étirage de la figure 2, montrant plus particulièrement différents maillons d'une chaîne sans fin appartenant au dispositif d'étirage.
Figure 11 est une vue partielle de dessus du dispositif d'étirage de la figure 2, montrant les première et deuxième pinces éloignées les unes des autres.
Figure 12 est une vue partielle de dessus d'un rail de guidage et d'un rail de retenue appartenant au dispositif d'étirage de la figure 2.

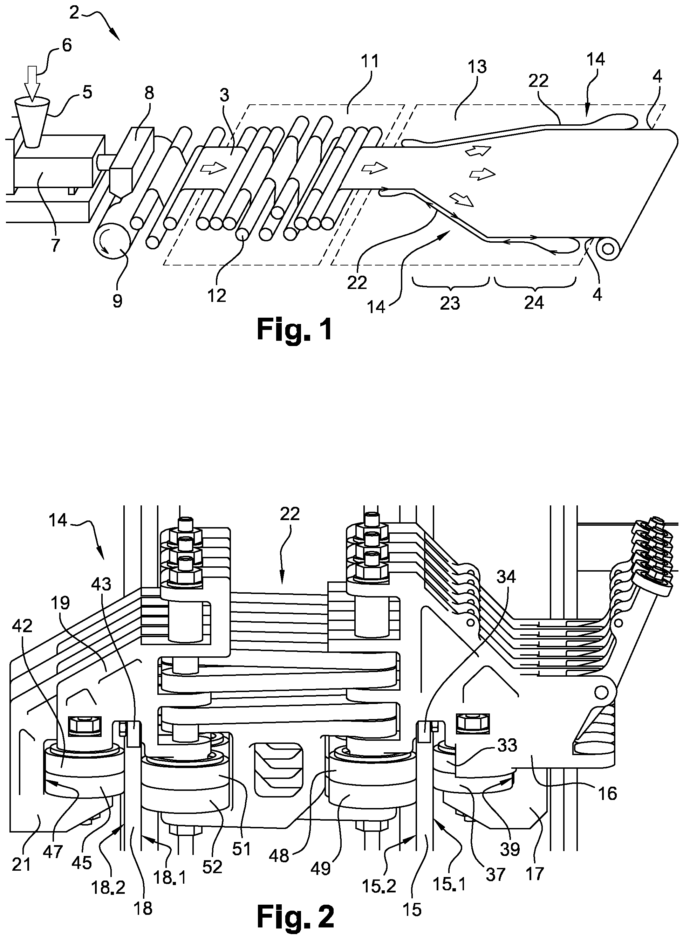

La figure 1 représente une installation de production 2 pour la production d'un film 3 en matière synthétique présentant deux bords longitudinaux 4 sensiblement parallèles.

L'installation de production 2 comporte successivement :
- un système d'alimentation 5 en matière synthétique 6,
- une extrudeuse 7 permettant une alimentation contrôlée en matière synthétique 6,
- un système de fusion 8 de la matière synthétique 6,
- un tambour de coulée 9 sur lequel est formé le film 3 par écoulement de la matière synthétique 6 fondue,
- un système d'étirage longitudinal 11 pour étirer le film 3 dans le sens longitudinal, le système d'étirage longitudinal 11 comportant des rouleaux 12 à différentiel de vitesse pour emporter et étirer le film 3, et
- un système d'étirage 13 pour étirer le film 3 au moins dans le sens transversal.

Le système d'étirage 13 comporte un four (non représenté sur les figures) permettant de réguler la température du film 3 pendant son étirage dans le sens transversal, et deux dispositifs d'étirage 14 disposés de part et d'autre du film 3.

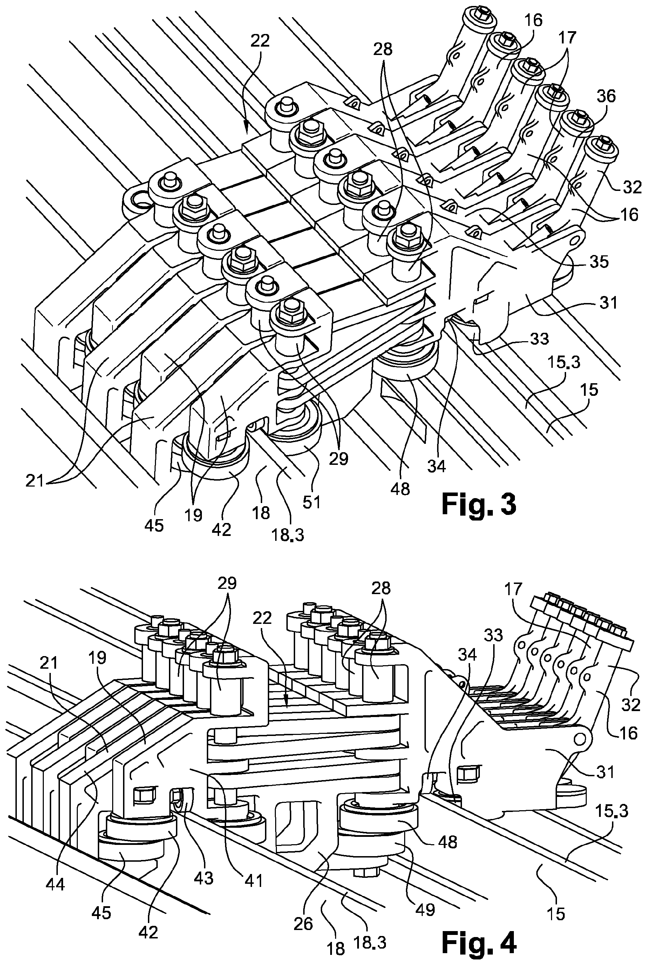

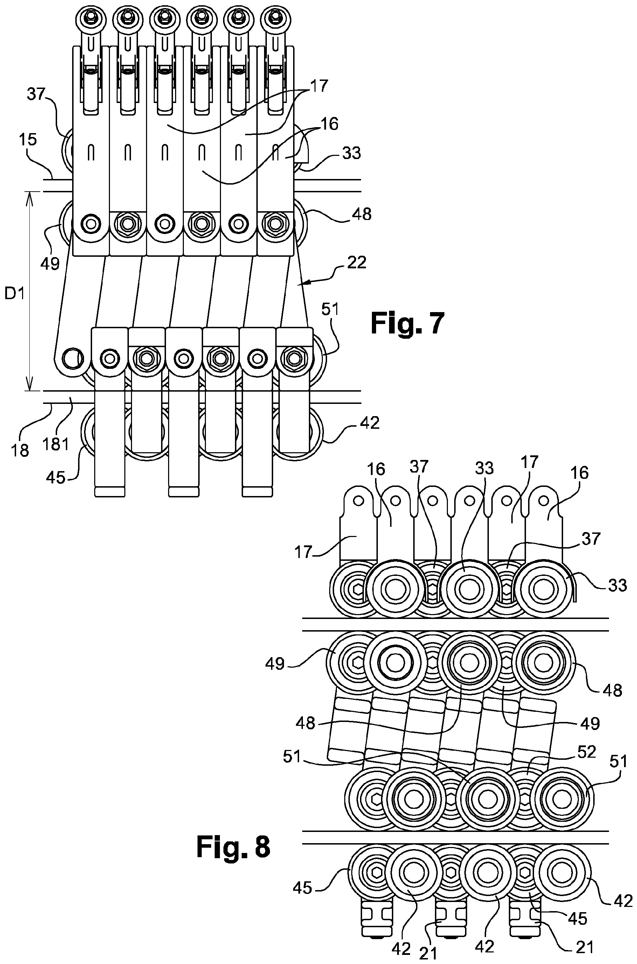

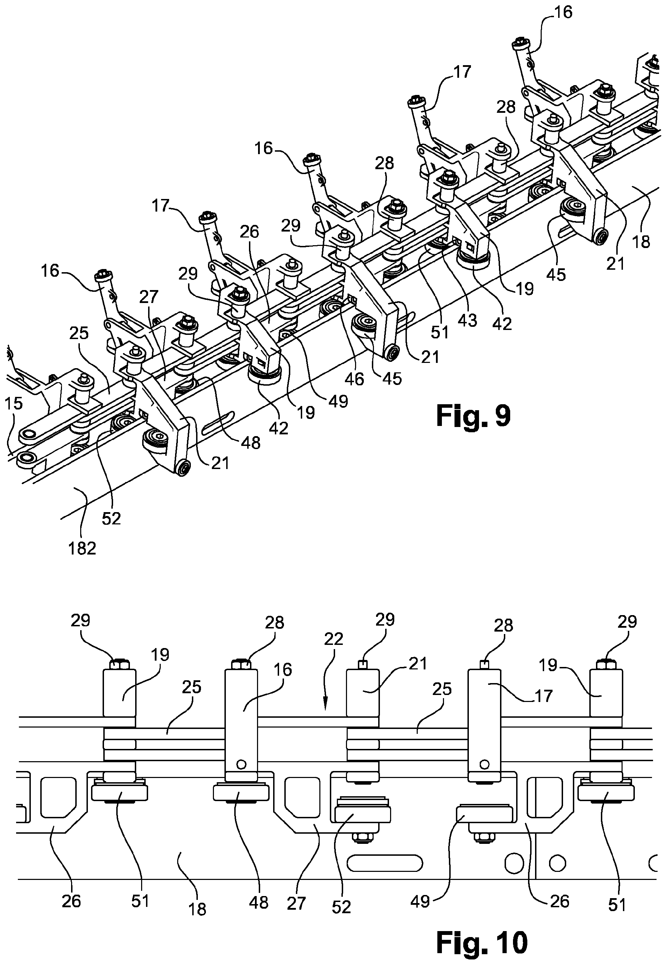

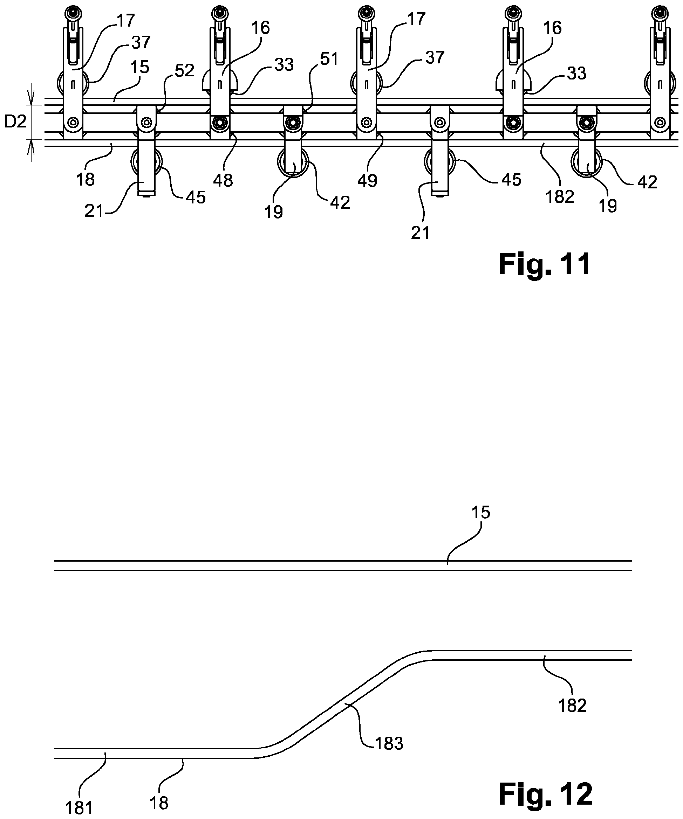

Comme montré notamment sur les figures 2 à 4, chaque dispositif d'étirage 14 comporte plus particulièrement :
- un rail de guidage 15 s'étendent au moins en partie dans le four et comportant une première surface de guidage 15.1 tournée vers le film 3 et une deuxième surface de guidage 15.2 opposée à la première surface de guidage 15.1,
- une pluralité de premières pinces 16 d'un premier type et une pluralité de deuxièmes pinces 17 d'un deuxième type destinées chacune à saisir un bord longitudinal 4 correspondant du film 3, les premières et deuxièmes pinces 16, 17 étant disposées alternativement le long du rail de guidage 15 respectif et étant configurées pour être guidées en translation par le rail de guidage 15 respectif,
- un rail de retenue 18 s'étendant le long du rail de guidage 15 respectif, le rail de retenue 18 comportant une surface d'appui 18.1 tournée vers le rail de guidage 15 respectif et une surface de retenue 18.2 opposée à la surface d'appui 18.1,
- une pluralité de premiers éléments de guidage 19 et une pluralité de deuxièmes éléments de guidage 21 disposés alternativement le long du rail de retenue 18 et configurés pour être guidés en translation par le rail de retenue 18, et
- une chaîne sans fin 22 configurée pour entraîner les premières et deuxièmes pinces 16, 17 respectives le long du rail de guidage 15 respectif, et pour entraîner les premiers et deuxièmes éléments de guidage 19, 21 respectifs le long du rail de retenue 15 respectif, la chaîne sans fin 22 étant déformable entre un premier état (voir les figures 3 et 7) dans lequel les premières et deuxièmes pinces 16, 17 sont disposées à proximité les unes des autres, et un deuxième état (voir les figures 9 et 11) dans lequel les premières et deuxièmes pinces 16, 17 sont éloignées les unes des autres.

Comme cela ressort de la figure 1, les rails de guidage 15 des deux dispositifs d'étirage 14 divergent l'un par rapport à l'autre dans une première zone 23 du système d'étirage 13 située dans le four, et s'étendent sensiblement parallèlement l'un par rapport à l'autre dans une deuxième zone 24 du système d'étirage 13 située en aval de la première zone 23 du système d'étirage 13, et qui peut être située soit dans ou en dehors du four. Selon le mode de réalisation représenté sur les figures, chaque rail de guidage 15 présente une section sensiblement rectangulaire.

Comme montré notamment sur les figures 9 et 10, chaque chaîne sans fin 22 comporte des premiers maillons 25 d'un premier type, des deuxièmes maillons 26 d'un deuxième type et des troisièmes maillons 27 d'un troisième type montés articulés les uns par rapport aux autres autour, et en outre des premiers éléments d'articulation 28 et des deuxièmes éléments d'articulation 29 disposés de manière alternée le long de la chaîne sans fin 22 et autour desquels sont montés articulés les premiers, deuxièmes et troisièmes maillons 25, 26, 27.

Comme montré sur les figures 3 et 4, chaque première pince 16 comporte un corps de pince 31 monté articulé sur un premier élément d'articulation 28 respectif, et un doigt de préhension 32 monté pivotant sur le corps de pince 31 et configuré pour saisir le film 3. Chaque première pince 16 comporte en outre un galet de guidage primaire 33 ayant un axe de rotation sensiblement vertical et configuré pour coopérer avec la première surface de guidage 15.1 du rail de guidage 15, et un galet de roulement primaire 34 ayant un axe de rotation sensiblement horizontal et configuré pour rouler sur une surface supérieure 15.3 du rail de guidage 15. Le galet de guidage primaire 33 de chaque première pince 16 fait saillie latéralement de part et d'autre du corps de pince 31 respectif.

Chaque deuxième pince 17 comporte un corps de pince 35 monté articulé sur un premier élément d'articulation 28 respectif, et un doigt de préhension 36 monté pivotant sur le corps de pince 35 et configuré pour saisir le film 3. Chaque deuxième pince 17 comporte en outre un galet de guidage secondaire 37 ayant un axe de rotation sensiblement vertical et configuré pour coopérer avec la première surface de guidage 15.1 du rail de guidage 15, et un galet de roulement secondaire (non visibles sur les figures) ayant un axe de rotation sensiblement horizontal et configuré pour rouler sur la surface supérieure 15.3 du rail de guidage 15. Le galet de guidage secondaire 37 de chaque deuxième pince 17 fait saillie latéralement de part et d'autre du corps de pince 35 respectif.

Comme montré sur la figure 8, le galet de guidage primaire 33 de chaque première pince 16 est décalé verticalement par rapport au galet de guidage secondaire 37 de chaque deuxième pince 17 adjacente à ladite première pince 16. Avantageusement, les galets de guidage primaires 33 s'étendent sensiblement dans un premier plan d'extension et les galets de guidage secondaires 37 s'étendent sensiblement dans un deuxième plan d'extension sensiblement parallèle au premier plan d'extension et décalé par rapport au premier plan d'extension.

Les premières et deuxièmes pinces 16, 17 sont plus particulièrement configurées de telle sorte que, lorsque la chaîne sans fin 22 est dans le premier état, le galet de guidage primaire 33 de chaque première pince 16 et le galet de guidage secondaire 37 de chaque deuxième pince 17 adjacente à ladite première pince 16 se chevauchent au moins en partie, et par exemple au moins au niveau de leur périphérie. Avantageusement, chaque deuxième pince 17 comporte un évidement de réception 39, et le galet de guidage primaire 33 de chaque première pince 16 est configuré pour s'étendre au moins en partie dans l'évidement de réception 39 de chaque deuxième pince 17 adjacente lorsque la chaîne sans fin 22 est dans le premier état.

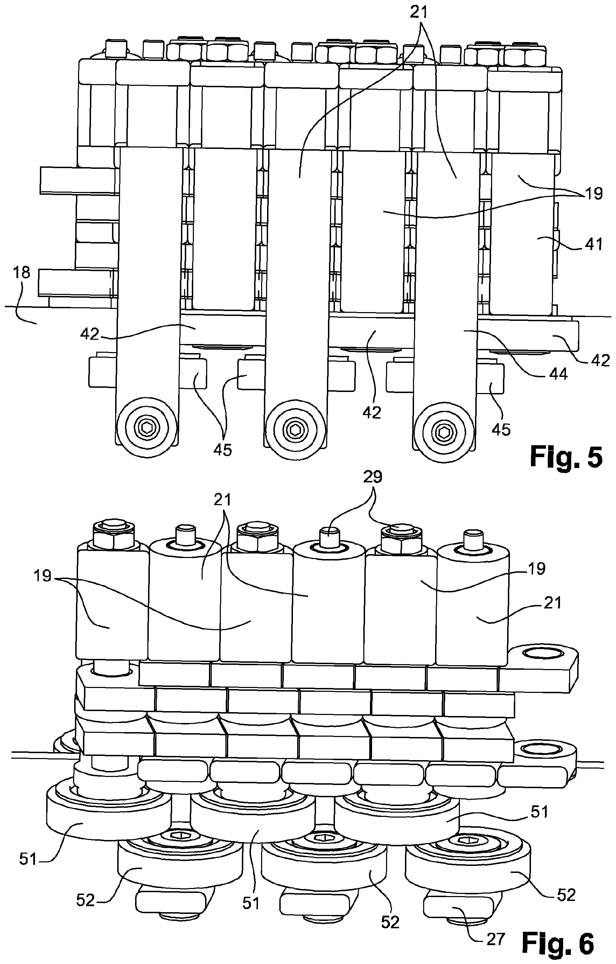

Comme montré sur les figures 4 et 5, chaque premier élément de guidage 19 comporte un corps de guidage 41 monté articulé sur un deuxième élément d'articulation 29 respectif, et un galet de retenue primaire 42 ayant une axe de rotation sensiblement vertical et configuré pour coopérer avec la surface de retenue 18.2 du rail de retenue 18. Le galet de retenue primaire 42 de chaque premier élément de guidage 19 fait saillie latéralement de part et d'autre du corps de guidage 41 respectif. Chaque galet de retenue primaire 42 est agencé pour être retenu par le rail de guidage 18 de manière à appliquer une force de retenue sur le deuxième élément d'articulation 29 respectif.

Chaque premier élément de guidage 19 comporte en outre un galet de roulement primaire 43 ayant un axe de rotation sensiblement horizontal et configuré pour rouler sur une surface supérieure 18.3 du rail de retenue 18.

Chaque deuxième élément de guidage 21 comporte un corps de guidage 44 monté articulé sur un deuxième élément d'articulation 29 respectif, et un galet de retenue secondaire 45 ayant une axe de rotation sensiblement vertical et configuré pour coopérer avec la surface de retenue 18.2 du rail de retenue 18. Chaque galet de retenue secondaire 45 est agencé pour être retenu par le rail de guidage 18 de manière à appliquer une force de retenue sur le deuxième élément d'articulation 29 respectif. Le galet de retenue secondaire 45 de chaque deuxième élément de guidage 21 fait avantageusement saillie latéralement de part et d'autre du corps de guidage 44 respectif.

Chaque deuxième élément de guidage 21 comporte en outre un galet de roulement secondaire 46 ayant un axe de rotation sensiblement horizontal et configuré pour rouler sur une surface supérieure 18.3 du rail de retenue 18.

Comme montré sur la figure 5, le galet de retenue primaire 42 de chaque premier élément de guidage 19 est décalé verticalement par rapport au galet de retenue secondaire 45 de chaque deuxième élément de guidage 21 adjacent audit premier élément de guidage 19. Avantageusement, les galets de retenue primaires 42 s'étendent sensiblement dans un plan d'extension primaire et les galets de retenue secondaires 45 s'étendent sensiblement dans un plan d'extension secondaire sensiblement parallèle au plan d'extension primaire et décalé par rapport au plan d'extension primaire.

Les premiers et deuxièmes éléments de guidage 19, 21 sont plus particulièrement configurés de telle sorte que, lorsque la chaîne sans fin 22 est dans le premier état, le galet de retenue primaire 42 de chaque premier élément de guidage 19 et le galet de retenue secondaire 45 de chaque deuxième élément de guidage 21 adjacent audit premier élément de guidage 19 se chevauchent au moins en partie, et par exemple au moins au niveau de leur périphérie. Avantageusement, chaque deuxième élément de guidage 21 comporte un évidement de réception 47, et le galet de retenue primaire 42 de chaque premier élément de guidage 19 est configuré pour s'étendre au moins en partie dans l'évidement de réception 47 de chaque deuxième élément de guidage 21 adjacent lorsque la chaîne sans fin 22 est dans le premier état.

Comme montré sur la figure 4, chaque premier élément d'articulation 28 sur lequel est montée une première pince 16 porte un galet d'appui 48 ayant un axe de rotation sensiblement vertical et configuré pour coopérer avec la deuxième surface de guidage 15.2 du rail de guidage 15, et chaque deuxième maillon 26 comporte un galet d'appui 49 ayant un axe de rotation sensiblement vertical et configuré pour prendre appui contre la deuxième surface de guidage 15.2 du rail de guidage 15. Le galet d'appui 49 de chaque deuxième maillon 26 s'étend avantageusement en regard d'un premier élément d'articulation 28 sur lequel est montée une deuxième pince 17, et de préférence coaxialement avec ledit premier élément d'articulation 28.

Le galet d'appui 48 porté par chaque premier élément d'articulation 28 sur lequel est montée une première pince 16 est décalé verticalement par rapport au galet d'appui 49 de chaque deuxième maillon 26 adjacent audit premier élément d'articulation 28. Avantageusement, les galets d'appui 48 portés par des premiers éléments d'articulation 28 s'étendent sensiblement dans un premier plan et les galets d'appui 49 des deuxièmes maillons 26 s'étendent sensiblement dans un deuxième plan sensiblement parallèle au premier plan et décalé par rapport au premier plan.

La chaîne sans fin 22 est configurée de telle sorte que, lorsque la chaîne sans fin 22 est dans le premier état, le galet d'appui 48 porté par chaque premier élément d'articulation 28 sur lequel est montée une première pince 16 et le galet d'appui 49 de chaque deuxième maillon 26 adjacent audit premier élément d'articulation 28 se chevauchent au moins en partie, et par exemple au moins au niveau de leur périphérie. Avantageusement, lorsque la chaîne sans fin 22 est dans le premier état, le galet d'appui 48 porté par chaque premier élément d'articulation 28 s'étend en partie entre le galet d'appui 49 d'un deuxième maillon 26 adjacent et le corps de pince 35 d'une deuxième pince 17 montée sur le premier élément d'articulation 28 situé sensiblement en regard du galet d'appui 49 dudit deuxième maillon 26 adjacent.

Comme montré sur la figure 10, chaque deuxième élément d'articulation 29 sur lequel est monté un premier élément de guidage 19 porte un galet d'appui 51 ayant un axe de rotation sensiblement vertical et configuré pour coopérer avec la surface d'appui 18.1 du rail de retenue 18, et chaque troisième maillon 27 comporte un galet d'appui 52 ayant un axe de rotation sensiblement vertical et configuré pour coopérer avec la surface d'appui 18.1 du rail de retenue 18. Le galet d'appui 52 de chaque troisième maillon 27 s'étend avantageusement en regard d'un deuxième élément d'articulation 29 sur lequel est montée un deuxième élément de guidage 21, et de préférence coaxialement avec ledit deuxième élément d'articulation 29.

Le galet d'appui 51 porté par chaque deuxième élément d'articulation 29 sur lequel est monté un premier élément de guidage 19 est décalé verticalement par rapport au galet d'appui 52 de chaque troisième maillon 27 adjacent audit deuxième élément d'articulation 29. Avantageusement, les galets d'appui 51 portés par des deuxièmes éléments d'articulation 29 s'étendent sensiblement dans un premier plan et les galets d'appui 52 des troisièmes maillons 27 s'étendent sensiblement dans un deuxième plan sensiblement parallèle au premier plan et décalé par rapport au premier plan.

Comme montré sur la figure 6, la chaîne sans fin 22 est configurée de telle sorte que, lorsque la chaîne sans fin 22 est dans le premier état, le galet d'appui 51 porté par chaque deuxième élément d'articulation 29 sur lequel est monté un premier élément de guidage 19 et le galet d'appui 52 de chaque troisième maillon 27 adjacent audit deuxième élément d'articulation 29 se chevauchent au moins en partie, et par exemple au moins au niveau de leur périphérie. Avantageusement, lorsque la chaîne sans fin 22 est dans le premier état, le galet d'appui 51 porté par chaque deuxième élément d'articulation 29 s'étend en partie entre le galet d'appui 52 d'un troisième maillon 27 adjacent et le corps de guidage 44 du deuxième élément de guidage 21 monté sur le deuxième élément d'articulation 29 situé sensiblement en regard du galet d'appui 52 dudit troisième maillon 27 adjacent.

Comme montré sur les figures 8 et 9, chaque rail de retenue 18 comporte une première portion de rail 181 s'étendant sensiblement parallèlement au rail de guidage 15 respectif et écartée du rail de guidage 15 respectif d'une première distance D1, et une deuxième portion de rail 182 située en aval de la première portion de rail 181 et s'étendant sensiblement parallèlement au rail de guidage 15 respectif, la deuxième portion de rail 182 étant écartée du rail de guidage 15 respectif d'une deuxième distance D2 différente de la première distance D1. Chaque rail de retenue 18 comporte en outre une portion de transition 183 reliant les première et deuxième portions de rail 181, 182 respectives. Avantageusement, chaque portion de transition 183 forme une rampe inclinée.

Chaque rail de retenue 18 est plus particulièrement configuré de telle sorte qu'un déplacement des premiers et deuxièmes éléments de guidage 19, 21 de la première portion de rail 181 à la deuxième portion de rail 182 entraîne une déformation de la chaîne sans fin 22 entre les premier et deuxième états.

En effet, chaque chaîne sans fin est maintenue, au niveau des premiers éléments d'articulation 28, par les premières et deuxièmes pinces 16, 17 respectives sur le rail de guidage 15 respectif, et, au niveau des deuxièmes éléments d'articulation 29, par les premiers et deuxièmes éléments de guidage 19, 21 sur le rail de retenue 18 respectif. L'écartement ou le rapprochement entre chaque rail de guidage 15 et le rail de retenue respectif permet, en faisant varier la distance entre les premiers éléments d'articulation pourvus de pinces et les deuxièmes éléments d'articulation pourvus d'éléments de guidage, de modifier la pliure de la chaîne sans fin respective et donc de modifier le pas de chaîne et l'espacement entre les premières et deuxièmes pinces 16, 17.

En particulier, les premiers, deuxièmes et troisièmes maillons 25, 26, 27 de chaque chaîne sans fin 2 s'étendent transversalement au rail de guidage 15 respectif lorsque ladite chaîne sans fin 22 est dans le premier état, et s'étendent sensiblement parallèlement au rail de guidage 15 respectif lorsque ladite chaîne sans fin 22 est dans le deuxième état.

Avantageusement, la portion de transition 183 de chaque rail de retenue 18 est située dans la première zone 23 du système d'étirage 13. Ces dispositions permettent d'assurer une déformation de la chaîne sans fin 22 entre les premier et deuxième états dans la première zone 23 du système d'étirage 13, et donc d'assurer un étirage longitudinal ou une relaxation longitudinale du film 3 simultanément à un étirage transversal de ce dernier.

Le fonctionnement du système d'étirage 13 va maintenant être décrit en considérant que la deuxième distance D2 séparant chaque deuxième portion de rail 182 et le rail de guidage 15 respectif est inférieure à la première distance D1 séparant chaque première portion de rail 181 et le rail de guidage 15 respectif.

Lors de l'entrée du film 3 dans le système d'étirage 13, les bords longitudinaux 4 du film 3 sont saisis respectivement par les premières et deuxièmes pinces 16, 17 de chaque dispositif d'étirage 14. Les premières et deuxièmes pinces 16, 17, entraînées par les chaînes sans fin 22, transportent le film 3 le long des rails de guidage 15. Dans la première zone 23 du système d'étirage 13, le film 3, ayant atteint une température adéquate d'étirage, est étiré dans le sens transversal du fait de la divergence des rails de guidage 15, et donc de l'augmentation continue de l'espacement entre les premières et deuxièmes pinces 16, 17 de l'un des dispositifs d'étirage 14 et les premières et deuxièmes pinces 16, 17 de l'autre des dispositifs d'étirage 14.

Lorsque les premiers et deuxièmes éléments de guidage 19, 21 de chaque dispositif d'étirage 14 atteignent la portion de transition 183 et la deuxième portion de rail 182 du rail de retenue 18 respectif, les galets d'appui 52, 51 portés par chaque troisième maillon 27 et par chaque deuxième élément d'articulation 29 sur lequel est monté un premier élément de guidage 19 sont sollicités vers le rail de guidage 15 par la portion de transition 183 et la deuxième portion de rail 182 du rail de retenue 18 respectif, ce qui induit un déplacement des deuxièmes éléments d'articulation 29 vers le rail de guidage 15 respectif. Ce déplacement des deuxièmes éléments d'articulation 29 a pour effet d'augmenter le pas de chaîne et d'éloigner les premières et deuxièmes pinces 16, 17 de chaque dispositif d'étirage 14. Ces dispositions permettent ainsi d'assurer un étirage longitudinal du film 3 simultanément à son étirage transversal.

Le fonctionnement du système d'étirage 13 va maintenant être décrit en considérant que la deuxième distance D2 séparant chaque deuxième portion de rail 182 et le rail de guidage 15 respectif est supérieure à la première distance D1 séparant chaque première portion de rail 181 et le rail de guidage 15 respectif.

Lorsque les premiers et deuxièmes éléments de guidage 19, 21 de chaque dispositif d'étirage 14 atteignent la portion de transition 183 et la deuxième portion de rail 182 du rail de retenue 18 respectif, les galets de retenue 42, 45 portés par chacun des premiers et deuxièmes éléments de guidage 19, 21 sont sollicités à distance du rail de guidage 15 par la portion de transition 183 et la deuxième portion de rail 182 du rail de retenue 18 respectif, ce qui induit un déplacement des deuxièmes éléments d'articulation 29 à distance du rail de guidage 15 respectif. Ce déplacement des deuxièmes éléments d'articulation 29 a pour effet de diminuer le pas de chaîne et de rapprocher les premières et deuxièmes pinces 16, 17 de chaque dispositif d'étirage 14. Ces dispositions permettent ainsi d'assurer une relaxation longitudinale du film 3 simultanément à son étirage transversal.

Selon une variante de réalisation de l'invention, les rails de guidage 15 pourraient présenter, dans la deuxième zone 24 du système d'étirage 13, une portion sur laquelle les rails de guidage 15 convergent l'un vers l'autre de manière à permettre une relaxation transversale du film simultanément à sa relaxation longitudinale

Comme il va de soi, l'invention ne se limite pas à la seule forme d'exécution de ce système d'étirage, décrite ci-dessus à titre d'exemple, elle en embrasse au contraire toutes les variantes de réalisation.

## Revendications

1. Dispositif d'étirage (14) pour étirer un film (3) en matière synthétique au moins dans un sens transversal, comprenant :
- un rail de guidage (15) comportant une première surface de guidage (15.1) destinée à être tournée vers le film (3) et une deuxième surface de guidage (15.2) opposée à la première surface de guidage (15.1),
- une pluralité de premières pinces (16) d'un premier type et une pluralité de deuxièmes pinces (17) d'un deuxième type destinées chacune à saisir un même bord longitudinal (4) du film (3), les premières et deuxièmes pinces (16, 17) étant disposées alternativement le long du rail de guidage (15) et étant configurées pour être guidées par le rail de guidage (15),
- une chaîne sans fin (22) reliée aux premières et deuxièmes pinces (16, 17) et configurée pour entraîner les premières et deuxièmes pinces (16, 17) le long du rail de guidage (15), la chaîne sans fin (22) étant déformable entre un premier état dans lequel les premières et deuxièmes pinces (16, 17) sont disposées à proximité les unes des autres, et un deuxième état dans lequel les premières et deuxièmes pinces (16, 17) sont éloignées les unes des autres,
chaque première pince (16) comporte un galet de guidage primaire (33) configuré pour coopérer avec la première surface de guidage (15.1) du rail de guidage (15) et chaque deuxième pince (17) comporte un galet de guidage secondaire (37) configuré pour coopérer avec la première surface de guidage (15.1) du rail de guidage (15), le galet de guidage primaire (33) de chaque première pince (16) étant décalé verticalement par rapport au galet de guidage secondaire (37) de chaque deuxième pince (17) adjacente à ladite première pince (16), le dispositif d'étirage (14) étant **caractérisé en ce que** les premières et deuxièmes pinces (16, 17) sont configurées de telle sorte que, lorsque la chaîne sans fin (22) est dans le premier état, le galet de guidage primaire (33) de chaque première pince (16) et le galet de guidage secondaire (37) de chaque deuxième pince (17) adjacente à ladite première pince (16) se chevauchent au moins en partie.

2. Dispositif d'étirage (14) selon la revendication 1, dans lequel chaque deuxième pince (17) comporte au moins un évidement de réception (39), le galet de guidage primaire (33) de chaque première pince (16) s'étendant au moins en partie dans l'évidement de réception (39) de chaque deuxième pince (17) adjacente lorsque la chaîne sans fin (22) est dans le premier état.

3. Dispositif d'étirage (14) selon la revendication 1 ou 2, dans lequel la chaîne sans fin (22) comporte au moins :
- des premiers maillons (25) d'un premier type et des deuxièmes maillons (26) d'un deuxième type montés articulés les uns par rapport aux autres, et
- des premiers éléments d'articulation (28) et des deuxièmes éléments d'articulation (29) disposés de manière alternée le long de la chaîne sans fin (22) et autour desquels sont montés articulés les premiers et deuxièmes maillons (25, 26), les premières et deuxièmes pinces (16, 17) étant montées sur les premiers éléments d'articulation (28).

4. Dispositif d'étirage (14) selon la revendication 3, dans lequel chaque premier élément d'articulation (28) sur lequel est montée une première pince (16) porte un galet d'appui (48) configuré pour coopérer avec la deuxième surface de guidage (15.2) du rail de guidage (15).

5. Dispositif d'étirage (14) selon la revendication 3 ou 4, dans lequel chaque deuxième maillon (26) comporte un galet d'appui (49) configuré pour prendre appui contre la deuxième surface de guidage (15.2) du rail de guidage (15).

6. Dispositif d'étirage (14) selon les revendications 4 et 5, dans lequel le galet d'appui (48) porté par chaque premier élément d'articulation (28) sur lequel est montée une première pince (16) est décalé verticalement par rapport au galet d'appui (49) de chaque deuxième maillon (26) adjacent audit premier élément d'articulation (28), la chaîne sans fin (22) étant configurée de telle sorte que, lorsque la chaîne sans fin (22) est dans le premier état, le galet d'appui (48) porté par chaque premier élément d'articulation (28) sur lequel est montée une première pince (16) et le galet d'appui (49) de chaque deuxième maillon (28) adjacent audit premier élément d'articulation (28) se chevauchent au moins en partie.

7. Dispositif d'étirage (14) selon la revendication 6, dans lequel le galet d'appui (49) porté par chaque deuxième maillon (26) s'étend sensiblement en regard d'un premier élément d'articulation (28) sur lequel est montée une deuxième pince (17).

8. Dispositif d'étirage (14) selon l'une quelconque des revendications 3 à 7, lequel comporte en outre :
- un rail de retenue (18) s'étendant le long du rail de guidage (15), le rail de retenue (15) comportant une surface d'appui (18.1) tournée vers le rail de guidage (15) et une surface de retenue (18.2) opposée à la surface d'appui (18.1), , et
- une pluralité de premiers éléments de guidage (19) et une pluralité de deuxièmes éléments de guidage (21) disposés alternativement le long du rail de retenue (18) et configurés pour être guidés par le rail de retenue (18), les premiers et deuxièmes éléments de guidage (19, 21) étant montés sur les deuxièmes éléments d'articulation (29) de la chaîne sans fin (22) et étant configurés pour être entraînés par la chaîne sans fin (22) le long du rail de retenue (18).

9. Dispositif d'étirage (14) selon la revendication 8, dans lequel le rail de retenue (18) comporte une première portion de rail (181) s'étendant sensiblement parallèlement au rail de guidage (15) et écartée du rail de guidage (15) d'une première distance (D1), et une deuxième portion de rail (182) s'étendant sensiblement parallèlement au rail de guidage (15) et écartée du rail de guidage (15) d'une deuxième distance (D2) différente de la première distance (D1), la deuxième portion de rail (182) étant située en aval de la première portion de rail (181), et dans lequel le rail de retenue (18) est configuré de telle sorte qu'un déplacement des premiers et deuxièmes éléments de guidage (19, 21) de la première portion de rail (181) à la deuxième portion de rail (182) entraîner une déformation de la chaîne sans fin (22) entre les premier et deuxième états.

10. Dispositif d'étirage (14) selon la revendication 9, dans lequel la deuxième distance (D2) est inférieure à la première distance (D1), et le rail de retenue (18) est configuré de telle sorte qu'un déplacement des premiers et deuxièmes éléments de guidage (19, 21) de la première portion de rail (181) à la deuxième portion de rail (182) entraîne une déformation de la chaîne sans fin (22) du premier état au deuxième état de manière à induire un étirage longitudinal du film (3).

11. Dispositif d'étirage (14) selon la revendication 9, dans lequel la deuxième distance (D2) est supérieure à la première distance (D1), et le rail de retenue (18) est configuré de telle sorte qu'un déplacement des premiers et deuxièmes éléments de guidage (19, 21) de la première portion de rail (181) à la deuxième portion de rail (182) entraîne une déformation de la chaîne sans fin (22) du deuxième état au premier état de manière à induire une relaxation longitudinale du film (3).

12. Dispositif d'étirage (14) selon l'une des revendications 8 à 11, dans lequel chaque premier élément de guidage (19) comporte un galet de retenue primaire (42) configuré pour coopérer avec la surface de retenue (18.2) du rail de retenue (18) et chaque deuxième élément de guidage (21) comporte un galet de retenue secondaire (45) configuré pour coopérer avec la surface de retenue (18.2) du rail de retenue (18), le galet de retenue primaire (42) de chaque premier élément de guidage (19) étant décalé verticalement par rapport au galet de retenue secondaire (45) de chaque deuxième élément de guidage (21) adjacent audit premier élément de guidage (19), les premiers et deuxièmes éléments de guidage (19, 21) étant configurés de telle sorte que, lorsque la chaîne sans fin (22) est dans le premier état, le galet de retenue primaire (42) de chaque premier élément de guidage (19) et le galet de retenue secondaire (45) de chaque deuxième élément de guidage (21) adjacent audit premier élément de guidage (19) se chevauchent au moins en partie.

13. Dispositif d'étirage (14) selon la revendication 3 et l'une des revendications 8 à 12, dans lequel la chaîne sans fin (22) comporte en outre des troisièmes maillons (27) d'un troisième type, chaque troisième maillon (27) comportant un galet d'appui (52) configuré pour coopérer avec la surface d'appui (18.1) du rail de retenue (18).

14. Dispositif d'étirage (14) selon l'une quelconque des revendications 8 à 13, dans lequel chaque deuxième élément d'articulation (29) sur lequel est monté un premier élément de guidage (19) porte un galet d'appui (51) configuré pour coopérer avec la surface d'appui (18.1) du rail de retenue (18).

15. Dispositif d'étirage (14) selon les revendications 13 et 14, dans lequel le galet d'appui (51) porté par chaque deuxième élément d'articulation (29) sur lequel est monté un premier élément de guidage (19) est décalé verticalement par rapport au galet d'appui (52) de chaque troisième maillon (27) adjacent audit deuxième élément d'articulation (29), la chaîne sans fin (22) étant configurée de telle sorte que, lorsque la chaîne sans fin (22) est dans le premier état, le galet d'appui (51) porté par chaque deuxième élément d'articulation (29) sur lequel est monté un premier élément de guidage (19) et le galet d'appui (52) de chaque troisième maillon (27) adjacent audit deuxième élément d'articulation (29) se chevauchent au moins en partie.

16. Système d'étirage (13) pour étirer un film en matière synthétique au moins dans un sens transversal, comprenant deux dispositifs d'étirage (14) selon l'une quelconque des revendications 1 à 15 disposés de part et d'autre du film (3), les premières et deuxièmes pinces (16, 17) de l'un des dispositifs d'étirage (14) étant agencées pour saisir un premier bord longitudinal (4) du film (3) et les premières et deuxièmes pinces (16, 17) de l'autre des dispositifs d'étirage étant agencées pour saisir un deuxième bord longitudinal (4) du film (3).

## Patentansprüche

1. Streckvorrichtung (14) zum Strecken einer Folie (3) aus synthetischem Material mindestens in eine Querrichtung, umfassend:
- eine Führungsschiene (15), die eine erste Führungsoberfläche (15.1) umfasst, die dazu bestimmt ist, zu der Folie (3) gedreht zu werden, und eine zweite Führungsoberfläche (15.2), die der ersten Führungsoberfläche (15.1) gegenüberliegt,
- eine Vielzahl von ersten Zangen (16) einer ersten Art und eine Vielzahl von zweiten Zangen (17) einer zweiten Art, die jeweils dazu bestimmt sind, einen gleichen Längsrand (4) der Folie (3) zu greifen, wobei die ersten und zweiten Zangen (16, 17) abwechselnd entlang der Führungsschiene (15) angeordnet sind und ausgestaltet sind, von der Führungsschiene (15) geführt zu werden,
- eine Endloskette (22), die mit den ersten und zweiten Zangen (16, 17) verbunden und ausgestaltet ist, die ersten und zweiten Zangen (16, 17) entlang der Führungsschiene (15) anzutreiben, wobei die Endloskette (22) verformbar ist zwischen einem ersten Zustand, in dem die ersten und zweiten Zangen (16, 17) in der Nähe zueinander angeordnet sind, und einem zweiten Zustand, in dem die ersten und zweiten Zangen (16, 17) voneinander beabstandet sind,
wobei jede erste Zange (16) eine primäre Führungsrolle (33) umfasst, die ausgestaltet ist, mit der ersten Führungsoberfläche (15.1) der Führungsschiene (15) zusammenzuwirken, und jede zweite Zange (17) eine sekundäre Führungsrolle (37) umfasst, die ausgestaltet ist, mit der ersten Führungsoberfläche (15.1) der Führungsschiene (15) zusammenzuwirken, wobei die primäre Führungsrolle (33) jeder ersten Zange (16) in Bezug auf die sekundäre Führungsrolle (37) jeder zweiten Zange (17), die neben der ersten Zange (16) liegt, vertikal versetzt ist,
wobei die Streckvorrichtung (14) **dadurch gekennzeichnet ist, dass** die ersten und zweiten Zangen (16, 17) so ausgestaltet sind, dass, wenn sich die Endloskette (22) in dem ersten Zustand befindet, sich die primäre Führungsrolle (33) jeder ersten Zange (16) und die sekundäre Führungsrolle (37) jeder zweiten Zange (17), die neben der ersten Zange (16) liegt, mindestens teilweise überlagern.

2. Streckvorrichtung (14) nach Anspruch 1, wobei jede zweite Zange (17) mindestens eine Aufnahmeaussparung (39) umfasst, wobei sich die primäre Führungsrolle (33) jeder ersten Zange (16) mindestens teilweise in die Aufnahmeaussparung (39) jeder daneben liegenden zweiten Zange (17) erstreckt, wenn sich die Endloskette (22) in dem ersten Zustand befindet.

3. Streckvorrichtung (14) nach Anspruch 1 oder 2, wobei die Endloskette (22) mindestens umfasst:
- erste Kettenglieder (25) einer ersten Art und zweite Kettenglieder (26) einer zweiten Art, die zueinander angelenkt montiert sind, und
- erste Gelenkelemente (28) und zweite Gelenkelemente (29), die abwechselnd entlang der Endloskette (22) angeordnet sind und um welche die ersten und zweiten Kettenglieder (25, 26) angelenkt montiert sind, wobei die ersten und zweiten Zangen (16, 17) auf den ersten Gelenkelementen (28) montiert sind.

4. Streckvorrichtung (14) nach Anspruch 3, wobei jedes erste Gelenkelement (28), auf dem eine erste Zange (16) montiert ist, eine Stützrolle (48) trägt, die ausgestaltet ist, mit der zweiten Führungsoberfläche (15.2) der Führungsschiene (15) zusammenzuwirken.

5. Streckvorrichtung (14) nach Anspruch 3 oder 4, wobei jedes zweite Kettenglied (26) eine Stützrolle (49) umfasst, die ausgestaltet ist, sich gegen die zweite Führungsoberfläche (15.2) der Führungsschiene (15) zu stützen.

6. Streckvorrichtung (14) nach den Ansprüchen 4 und 5, wobei die Stützrolle (48), die von jedem ersten Gelenkelement (28) getragen wird, auf dem eine erste Zange (16) montiert ist, in Bezug auf die Stützrolle (49) jedes zweiten Kettenglieds (26), das neben dem ersten Gelenkelement (28) liegt, vertikal versetzt ist, wobei die Endloskette (22) so ausgestaltet ist, dass, wenn sich die Endloskette (22) in dem ersten Zustand befindet, sich die Stützrolle (48), die von jedem ersten Gelenkelement (28) getragen wird, auf dem eine erste Zange (16) montiert ist, und die Stützrolle (49) jedes zweiten Kettenglieds (28), das neben dem ersten Gelenkelement (28) liegt, mindestens teilweise überlagern.

7. Streckvorrichtung (14) nach Anspruch 6, wobei sich die Stützrolle (49), die von jedem zweiten Kettenglied (26) getragen wird, im Wesentlichen gegenüber einem ersten Gelenkelement (28) erstreckt, auf dem eine zweite Zange (17) montiert ist.

8. Streckvorrichtung (14) nach einem der Ansprüche 3 bis 7, die weiter umfasst:
- eine Rückhalteschiene (18) die sich entlang der Führungsschiene (15) erstreckt, wobei die Rückhalteschiene (15) eine Stützoberfläche (18.1) umfasst, die zu der Führungsschiene (15) gedreht ist, und eine Rückhalteoberfläche (18.2), die der Stützoberfläche (18.1) gegenüberliegt, und
- eine Vielzahl von ersten Führungselementen (19) und eine Vielzahl von zweiten Führungselementen (21), die abwechselnd entlang der Rückhalteschiene (18) angeordnet und ausgestaltet sind, von der Rückhalteschiene (18) geführt zu werden, wobei die ersten und zweiten Führungselemente (19, 21) auf den zweiten Gelenkelementen (29) der Endloskette (22) montiert und ausgestaltet sind, von der Endloskette (22) entlang der Rückhalteschiene (18) angetrieben zu werden.

9. Streckvorrichtung (14) nach Anspruch 8, wobei die Rückhalteschiene (18) einen ersten Schienenabschnitt (181) umfasst, der sich im Wesentlichen parallel zu der Führungsschiene (15) erstreckt und von der Führungsschiene (15) um eine erste Distanz (D1) beabstandet ist, und einen zweiten Schienenabschnitt (182), der sich im Wesentlichen parallel zu der Führungsschiene (15) erstreckt und von der Führungsschiene (15) um eine zweite Distanz (D2) beabstandet ist, die sich von der ersten Distanz (D1) unterscheidet, wobei sich der zweite Schienenabschnitt (182) stromabwärts von dem ersten Schienenabschnitt (181) befindet, und wobei die Rückhalteschiene (18) so ausgestaltet ist, dass eine Verschiebung der ersten und zweiten Führungselemente (19, 21) von dem ersten Schienenabschnitt (181) zu dem zweiten Schienenabschnitt (182) eine Verformung der Endloskette (22) zwischen dem ersten und zweiten Zustand bewirkt.

10. Streckvorrichtung (14) nach Anspruch 9, wobei die zweite Distanz (D2) kleiner ist als die erste Distanz (D1) und die Rückhalteschiene (18) so ausgestaltet ist, dass eine Verschiebung der ersten und zweiten Führungselemente (19, 21) von dem ersten Schienenabschnitt (181) zu dem zweiten Schienenabschnitt (182) eine Verformung der Endloskette (22) von dem ersten Zustand in den zweiten Zustand bewirkt, um eine Längsstreckung der Folie (3) zu veranlassen.

11. Streckvorrichtung (14) nach Anspruch 9, wobei die zweite Distanz (D2) größer ist als die erste Distanz (D1) und die Rückhalteschiene (18) so ausgestaltet ist, dass eine Verschiebung der ersten und zweiten Führungselemente (19, 21) von dem ersten Schienenabschnitt (181) zu dem zweiten Schienenabschnitt (182) eine Verformung der Endloskette (22) von dem zweiten Zustand in den ersten Zustand bewirkt, um eine Längsentspannung der Folie (3) zu veranlassen.

12. Streckvorrichtung (14) nach einem der Ansprüche 8 bis 11, wobei jedes erste Führungselement (19) eine primäre Rückhalterolle (42) umfasst, die ausgestaltet ist, mit der Rückhalteoberfläche (18.2) der Rückhalteschiene (18) zusammenzuwirken, und jedes zweite Führungselement (21) eine sekundäre Rückhalterolle (45) umfasst, die ausgestaltet ist, mit der Rückhalteoberfläche (18.2) der Rückhalteschiene (18) zusammenzuwirken, wobei die primäre Rückhalterolle (42) jedes ersten Führungselements (19) in Bezug auf die sekundäre Rückhalterolle (45) jedes zweiten Führungselements (21), das neben dem ersten Führungselement (19) liegt, vertikal versetzt ist, wobei die ersten und zweiten Führungselemente (19, 21) so ausgestaltet sind, dass, wenn sich die Endloskette (22) in dem ersten Zustand befindet, sich die primäre Rückhalterolle (42) jedes ersten Führungselements (19) und die sekundäre Rückhalterolle (45) jedes zweiten Führungselements (21), das neben dem ersten Führungselement (19) liegt, mindestens teilweise überlagern.

13. Streckvorrichtung (14) nach Anspruch 3 und einem der Ansprüche 8 bis 12, wobei die Endloskette (22) weiter dritte Kettenglieder (27) einer dritten Art umfasst, wobei jedes dritte Kettenglied (27) eine Stützrolle (52) umfasst, die ausgestaltet ist, mit der Stützoberfläche (18.1) der Rückhalteschiene (18) zusammenzuwirken.

14. Streckvorrichtung (14) nach einem der Ansprüche 8 bis 13, wobei jedes zweite Gelenkelement (29), auf dem ein erstes Führungselement (19) montiert ist, eine Stützrolle (51) trägt, die ausgestaltet ist, mit der Stützoberfläche (18.1) der Rückhalteschiene (18) zusammenzuwirken.

15. Streckvorrichtung (14) nach den Ansprüchen 13 und 14, wobei die Stützrolle (51), die von jedem zweiten Gelenkelement (29) getragen wird, auf dem ein erstes Führungselement (19) montiert ist, in Bezug auf die Stützrolle (52) jedes dritten Kettenglieds (27), das neben dem zweiten Gelenkelement (29) liegt, vertikal versetzt ist, wobei die Endloskette (22) so ausgestaltet ist, dass, wenn sich die Endloskette (22) in dem ersten Zustand befindet, sich die Stützrolle (51), die von jedem zweiten Gelenkelement (29) getragen wird, auf dem ein erstes Führungselement (19) montiert ist, und die Stützrolle (52) jedes dritten Kettenglieds (27), das neben dem zweiten Gelenkelement (29) liegt, mindestens teilweise überlagern.

16. Strecksystem (13) zum Strecken einer Folie aus synthetischem Material mindestens in eine Querrichtung, umfassend zwei Streckvorrichtungen (14) nach einem der Ansprüche 1 bis 15, die beidseits der Folie (3) angeordnet sind, wobei die ersten und zweiten Zangen (16, 17) einer der Streckvorrichtungen (14) angeordnet sind, um einen ersten Längsrand (4) der Folie (3) zu greifen, und wobei die ersten und zweiten Zangen (16, 17) der anderen der Streckvorrichtungen angeordnet sind, um einen zweiten Längsrand (4) der Folie (3) zu greifen.

## Claims

1. A stretching device (14) to stretch a film (3) made of synthetic material at least in the transverse direction, comprising:
- a guide rail (15) including a first guide surface (15.1) intended to be turned toward the film (3) and a second guide surface (15.2) opposite to the first guide surface (15.1),
- a plurality of first clamps (16) of a first type and a plurality of second clamps (17) of a second type each intended to grip a same longitudinal edge (4) of the film (3), the first and second clamps (16, 17) being alternately disposed along the guide rail (15) and being configured to be guided by the guide rail (15),
- an endless chain (22) connected to the first and second clamps (16,17) and configured to drive the first and second clamps (16,17) along the guide rail (15), the endless chain (22) being deformable between a first state in which the first and second clamps (16, 17) are disposed in close proximity to each other, and a second state in which the first and second clamps (16, 17) are distant from each other,
each first clamp (16) includes a primary guide roller (33) configured to cooperate with the first guide surface (15.1) of the guide rail (15) and each second clamp (17) includes a secondary guide roller (37) configured to cooperate with the first guide surface (15.1) of the guide rail (15), the primary guide roller (33) of each first clamp (16) being shifted vertically with respect to the secondary guide roller (37) of each second clamp (17) adjacent to said first clamp (16), the stretching device (14) being **characterized in that** the first and second clamps (16, 17) are configured such that, when the endless chain (22) is in the first state, the primary guide roller (33) of each first clamp (16) and the secondary guide roller (37) of each second clamp (17) adjacent to said first clamp (16) overlap at least partially.

2. The stretching device (14) according to claim 1, wherein each second clamp (17) includes at least one receiving recess (39), the primary guide roller (33) of each first clamp (16) extending at least partially in the receiving recess (39) of each adjacent second clamp (17) when the endless chain (22) is in the first state.

3. The stretching device (14) according to claim 1 or 2, wherein the endless chain (22) includes at least:
- first links (25) of a first type and second links (26) of a second type hingedly mounted relative to each other, and
- first articulating elements (28) and second articulating elements (29) alternately disposed along the endless chain (22) and around which the first and second links (25, 26) are hingedly mounted, the first and second clamps (16, 17) being mounted on the first articulating elements (28).

4. The stretching device (14) according to claim 3, wherein each first articulating element (28), on which a first clamp (16) is mounted, carries a bearing roller (48) configured to cooperate with the second guide surface (15.2) of the guide rail (15).

5. The stretching device (14) according to claim 3 or 4, wherein each second link (26) includes a bearing roller (49) configured to bear against the second guide surface (15.2) of the guide rail (15).

6. The stretching device (14) according to claims 4 and 5, wherein the bearing roller (48) carried by each first articulating element (28) on which a first clamp (16) is mounted, is shifted vertically with respect to the bearing roller (49) of each second link (26) adjacent to said first articulating element (28), the endless chain (22) being configured such that when the endless chain (22) is in the first state, the bearing roller (48) carried by each first articulating element (28) on which a first clamp (16) is mounted and the bearing roller (49) of each second link (28) adjacent to said first articulating element (28) overlap at least partially.

7. The stretching device (14) according to claim 6, wherein the bearing roller (49) carried by each second link (26) extends substantially opposite a first articulating element (28) on which a second clamp (17) is mounted.

8. The stretching device (14) according to any one of claims 3 to 7, which further includes:
- a retaining rail (18) extending along the guide rail (15), the retaining rail (15) including a bearing surface (18.1) turned toward the guide rail (15) and a retaining surface (18.2) opposite to the bearing surface (18.1), and
- a plurality of first guide elements (19) and a plurality of second guide elements (21) alternately disposed along the retaining rail (18) and configured to be guided by the retaining rail (18), the first and second guide elements (19, 21) being mounted on the second articulating elements (29) of the endless chain (22) and being configured to be driven by the endless chain (22) along the retaining rail (18).

9. The stretching device (14) according to claim 8, wherein the retaining rail (18) includes a first rail portion (181) extending substantially parallel to the guide rail (15) and spaced apart from the guide rail (15) by a first distance (D1), and a second rail portion (182) extending substantially parallel to the guide rail (15) and spaced apart from the guide rail (15) by a second distance (D2) different from the first distance (D1), the second rail portion (182) being located downstream of the first rail portion (181), and in which the retaining rail (18) is configured such that a displacement of the first and second guide elements (19, 21) from the first rail portion (181) to the second rail portion (182) results in a deformation of the endless chain (22) between the first and second states.

10. The stretching device (14) according to claim 9, wherein the second distance (D2) is smaller than the first distance (D1), and the retaining rail (18) is configured such that a displacement of the first and second guide elements (19, 21) from the first rail portion (181) to the second rail portion (182) results in a deformation of the endless chain (22) from the first state to the second state so as to induce a longitudinal stretching of the film (3).

11. The stretching device (14) according to claim 9, wherein the second distance (D2) is greater than the first distance (D1), and the retaining rail (18) is configured such that a displacement of the first and second guide elements (19, 21) from the first rail portion (181) to the second rail portion (182) results in a deformation of the endless chain (22) from the second state to the first state so as to induce a longitudinal relaxation of the film (3).

12. The stretching device (14) according to any of claims 8 to 11, wherein each first guide element (19) includes a primary retaining roller (42) configured to cooperate with the retaining surface (18.2) of the retaining rail (18) and each second guide element (21) includes a secondary retaining roller (45) configured to cooperate with the retaining surface (18.2) of the retaining rail (18), the primary retaining roller (42) of each first guide element (19) being shifted vertically with respect to the secondary retaining roller (45) of each second guide element (21) adjacent to said first guide element (19), the first and second guide elements (19, 21) being configured such that when the endless chain (22) is in the first state, the primary retaining roller (42) of each first guide element (19) and the secondary retaining roller (45) of each second guide element (21) adjacent to said first guide element (19) overlap at least partially.

13. The stretching device (14) according to claim 3 and any of claims 8 to 12, wherein the endless chain (22) further includes third links (27) of a third type, each third link (27) including a bearing roller (52) configured to cooperate with the bearing surface (18.1) of the retaining rail (18).

14. The stretching device (14) according to any one of claims 8 to 13, wherein each second articulating element (29), on which a first guide element (19) is mounted, carries a bearing roller (51) configured to cooperate with the bearing surface (18.1) of the retaining rail (18).

15. The stretching device (14) according to claims 13 and 14, wherein the bearing roller (51) carried by each second articulating element (29), on which a first guide element (19) is mounted, is shifted vertically with respect to the bearing roller (52) of each third link (27) adjacent to said second articulating element (29), the endless chain (22) being configured such that, when the endless chain (22) is in the first state, the bearing roller (51) carried by each second articulating element (29) on which a first guide element (19) is mounted and the bearing roller (52) of each third link (27) adjacent to said second articulating element (29) overlap at least partially.

16. A stretching system (13) to stretch a film made of synthetic material at least in the transverse direction, comprising two stretching devices (14) according to any one of claims 1 to 15 disposed on either side of the film (3), the first and second clamps (16, 17) of one of the stretching devices (14) being arranged to grip a first longitudinal edge (4) of the film (3) and the first and second clamps (16, 17) of the other stretching device being arranged to grip a second longitudinal edge (4) of the film (3).
